# EUROPEAN PATENT APPLICATION

(11) **EP 1 592 142 A1**
(43) Date of publication of application: **02.11.2005**
(21) Application number: 04707669.0
(22) Date of filing: 03.02.2004
(51) Int. Cl.: H04B 1/59, H04B 5/02, G06K 17/00

(54) **COMMUNICATION DEVICE AND COMMUNICATION SYSTEM**

(30) Priority: 07.02.2003 JP 2003030437
(71) Applicant: Hanex Co., Ltd., Tokyo 160-00023 (JP)
(72) Inventor: Semba, Fujio c/o Hanex Co., Ltd., Tokyo 160-0023 (JP); Hyodo, Nakamaro c/o Hanex Co., Ltd., Tokyo 160-0023 (JP)
(74) Representative: Tiedtke, Harro
(86) International application number: PCT/JP2004/001077
(87) International publication number: WO 2004/070966

(57) **Abstract**

An object of the present invention is to allow a communication device which is based on a new principle by an electromagnetic induction method and an opening/closing system employing the communication device to be provided.

The structure thereof is **characterized in that** at least an antenna coil 2 of a transmitting/receiving section 3 of the communication device 1 is protected by a metal layer 4 which is formed to have a thickness through which the communication device 1 can communicate with a data carrier 5 by an electromagnetic induction effect.

## Description

### BACKGROUND OF THE INVENTION

### 1.Field of the Invention

The present invention relates to a communication device which has a transmitting/receiving section including an antenna, a control section, and a memory section and which performs communication with a data carrier by electromagnetic waves and a communication system.

This application claims benefits of foreign priority to a foreign patent application of prior Japanese Patent Application No. 2003-30437, filed on Feb. 7, 2003 in Japan.

### 2.Description of the related art

A data carrier which has an antenna coil and a memory section and which performs non-contact communication by electromagnetic waves has been employed widely in a variety of fields. For example, a data carrier formed into a card shape has been employed as IC cards for a season ticket of a transportation system, a financial-related cash card, an personal identification card for opening or closing an opening/closing door ensuring security, or the like. Generally, these IC card is formed in such a manner that a data carrier is sandwiched between two thin protecting resin plates.

Meanwhile, a communication device performing electromagnetic wave communication with a data carrier is installed as a card detection section for example in an automatic ticket checker of a transport facility, an automatic money cashiers of a financial institution, an opening/closing lock mechanism for opening/closing an opening or closing door, or the like.

The data carrier and the communication device mutually perform non-contact communication, utilizing electromagnetic waves. That is, each of the data carrier and communication device is provided with an antenna coil, a control circuit, and a memory section to mutually perform transmission and reception of information, utilizing the antenna coil to execute a variety of managements and controls.

For example, in a case where the data carrier is employed as a non-contact type key for automatically unlocking an opening/closing door, the communication device is arranged on the opening/closing door or on a wall part adjoining the door, and the card-typed data carrier is brought near the communication device so that the opening/closing door is automatically unlocked when a code sent from the data carrier corresponds to a code stored in the communication device.

Meanwhile, while an electromagnetic wave easily passes through wood and resin that are non-conductive materials, an eddy current is generated in a conductive material such as an iron plate due to an electromagnetic wave so that communication sensitivity considerably decreases. Therefore, conventionally, it has been considered that electromagnetic wave communication via a conductive material such as an iron plate is impossible. Although the communication device is generally protected by a case or the like for the sake of durability, due to the above-described reasons, the communication device, particularly the surface part covering its antenna, is protected by a resin (plastic) case that is a non-conductive material, so as to be arranged at or installed on an object. However, since the resin case has lower strength and durability than those of a metal case, it is needless to say that it is desired that the communication device is protected by a metal case if it is possible.

Meanwhile, there are many cases where a metal plate made of iron, aluminum, or the like is employed for the sake of security and fire retardant propeny for an opening/closing door for a doorway of a factory, laboratory facility, office, or the like or a covering material for a wall. Therefore, in order to provide an automatic unlock system as described above on such a part, the communication device is generally accommodated in a resin box attached on a surface of a door or a surface of a wall adjacent to the door, and the data carrier is brought bear the surface of the box so as to unlock it. However, it is undesirable to allow the box to protrude from a surface of a door or a wall from an external appearance viewpoint, and since it can be easily broken, there is a problem also from a security viewpoint.

A system in which the communication device is arranged inside a wall employing an iron plate or the like and in which the data carrier is brought near from the wall surface to unlock an opening/closing door is disclosed in Japanese Patent Application Laid-Open No. 2003-41819. In this system, the communication device having a transmitting/receiving section including an antenna, a control section, and a memory section is attached inside the wall adjacent to the door so as to perform communication with the data carrier, utilizing leakage magnetic flux leaking through a fine gap of the wall of the opening/closing door to perform automatic unlocking of the door. Since the communication device is not exposed on the surface of the wall in this system, the system is excellent from external appearance and security viewpoints. However, since the communication device needs to be arranged close to the boundary part between the opening/closing door and the wall, a problem of restricted installation remains.

### SUMMARY OF THE INVENTION

The present invention is to solve the above-described problem, and it is an object of the present invention to provide a communication device which solves the problem remaining in a communication device adopting the above-mentioned magnetic flux leakage method and a communication system employing the same.

A communication device according to the present invention is a communication device which has a transmitting/receiving section including an antenna, a control section, and a memory section to perform electromagnetic wave communication with a data carrier. The present communication device is characterized in that at least a surface side of the antenna part of the transmitting/receiving section is covered with a metal layer and that the metal layer has a material and a thickness through which electromagnetic wave communication is possible with the data carrier via the metal layer by an electromagnetic induction effect.

In the communication device, since at least a surface side of the antenna part of the transmitting/receiving section that is the communication terminal part of the communication device is protected by the specific metal layer, durability of the transmitting/receiving terminal part can be improved without deteriorating a practical communication sensitivity.

In the communication device, at least a communication side surface of the communication device including the transmitting/receiving section, control section, and memory section can be covered with the metal layer. With such a structure, durability of the entire communication device can be improved.

In the communication device, austenitic stainless steel, titanium, or cupronickel can be employed as the material of the metal layer. By employing these materials, even a relatively thin protective layer can obtain a high communication sensitivity without deteriorating durability

In the communication device, the thickness of the metal layer can be selected from the range from 0.05 mm or greater to 1 mm or less. This thickness range can ensure a high communication sensitivity and durability reliably.

In the communication device, on a surface side of the metal layer a position display section displaying a communication position or a code display section having a code function composed of a mark, a figure, or a symbol can be provided.

In the case where the position display section displaying the communication position is provided as described above, since the data carrier can be allowed to approach the communication position of the communication device from the surface side of the metal layer reliably, electromagnetic wave communication is possible between the communication device and the data carrier at a high communication sensitivity. In the case where the code display section is provided, since only a specific person which has recognized the code display section in advance can execute electromagnetic wave communication, a communication system having a high security function can be constructed.

A communication system according to the present invention is a communication system which includes a data carrier having a transmitting/receiving section including an antenna, a control section, and a memory section and a communication device having a transmitting/receiving section including an antenna, a control section, and a memory section to perform electromagnetic wave communication with the data carrier. The present communication system is characterized in that at least a surface of the antenna part of the communication device is covered with a metal layer and that the metal layer has a material and a thickness through which electromagnetic wave communication is possible with the data carrier via the metal layer by an electromagnetic induction effect.

The communication system can be constructed in such a manner that at least one surface of the data carrier is covered with a metal layer and that the metal layer has a material and a thickness through which electromagnetic wave communication is possible with the communication device via the metal layer by an electromagnetic induction effect. In this way, since durability of the data carrier employed in the communication system becomes high, reliability of the communication system can be further improved.

In the communication system, the communication device can be installed in an opening/closing lock mechanism. The communication system can be constructed in such a manner that at least a surface side of the antenna part of the communication device installed is covered with the metal layer and that the control section of the communication device recognizes the difference between code information stored in the memory section of the communication device and specific code information transmitted from the data carrier so that the control section of the communication device outputs an unlock signal to the opening/closing lock mechanism when both information correspond to each other.

With this structure, a part of a target made of a metallic material can form the metal layer, and communication with the data carrier which has been approached from the outside is performed so that unlocking can be performed. Thus, it is not necessary to form a special magnetic flux leakage path in the vicinity of the antenna part of the communication device. Further, there is no restriction on arrangement or installation position of the communication device.

In the communication system, the opening/closing lock mechanism can be disposed to be laid across an opening/closing door or an opening/closing lid and a metal wall adjacent thereto or a wall containing a metal material, and the communication device can be arranged on an opening part provided on the wall or is arranged inside the wall. In this manner, the communication system of the present invention can be applied to opening/closing control for the opening/closing door or the opening/closing lid provided on a metal wall. Since providing a protruding portion on a surface of the metal wall is not needed, the system is excellent from external appearance and security viewpoints.

In the communication system, on a surface side of the wall a position display section displaying a communication position or a code display section having a code function composed of a mark, a figure, or a symbol can be displayed.

In the case where the position display section displaying the communication position is provided as described above, the data carrier can be allowed to approach the communication position necessary for opening/closing from the surface side of the metal layer reliably. Thus, since electromagnetic wave communication is possible between the communication device and the data carrier, ensuring a high communication sensitivity, anybody can control the opening/closing lock mechanism reliably. In the case where the code display section is provided, since only a specific person which has recognized the code display section in advance can execute electromagnetic wave communication, ensuring a high communication sensitivity, opening/closing control for the opening/closing lock mechanism can be executed reliably in a state in which a high security function is ensured.

### BRIEF DESCRIPTION OF THE DRAWINGS

FIG. 1 is a block diagram explaining an electromagnetic wave communication principle of a communication system employing a communication device according to the present invention.
FIG. 2 is a block diagram explaining an opening/closing system of an opening/closing door utilizing the electromagnetic wave communication principle of the communication system employing the communication device according to the present invention.
FIG. 3 is a flow chart explaining operations of the opening/closing system of the opening/closing door utilizing the electromagnetic wave communication principle of the communication system employing the communication device according to the present invention.
FIG. 4 is a front view of an opening/closing door, seen from the outside thereof, which is obtained by applying the opening/closing system of the opening/closing door utilizing the electromagnetic wave communication principle of the communication system employing the communication device according to the present invention to an opening/closing door of a building composed of a metal material and to a wall adjacent thereto.
FIG. 5 is a side cross-sectional view showing one example in which the opening/closing system of the opcning/closing door utilizing the electromagnetic wave communication principle of the communication system employing the communication device according to the present invention is applied to the opening/closing door of a building composed of a metal material and to the wall adjacent thereto.
FIG. 6 is a perspective view of a safe, seen from the outside thereof, which is obtained by applying the opening/closing system of the opening/closing door utilizing the electromagnetic wave communication principle of the communication system employing the communication device according to the present invention to an opening/closing door of the safe made of a metal material and to a wall adjacent thereto.
FIG. 7 is a cross-sectional view showing a manner in which the communication device is disposed in a surface side of the safe via a metal layer and a cross-sectional view showing a structure of an opening/closing lock device provided between the opening/closing door of the safe and the wall adjacent thereto.
FIG. 8A is a cross-sectional explanatory view showing one example in which a data carrier structure of a communication system according to the present invention is constructed as a card.
FIG.8B is a front explanatory view showing one example in which a data carrier structure of a communication system according to the present invention is constructed as a card.
FIG. 9A is a view showing a structure of a data carrier having a circular antenna coil.
FIG. 9B is a view showing a manner of a magnetic field generated in the antenna coil.
FIG. 10 is a block diagram showing a structure of a control system of a data carrier.
FIG. 11 is a cross-sectional explanatory view showing a structure in which a data carrier having a circular antenna coil is enclosed in a case formed by a metal layer.
FIG. 12 is a cross-sectional explanatory view showing a structure in which a data carrier having.a cylindrical antenna coil is enclosed in a case formed by a metal layer.

### DESCRIPTION OF THE PREFERRED EMBODIMENT

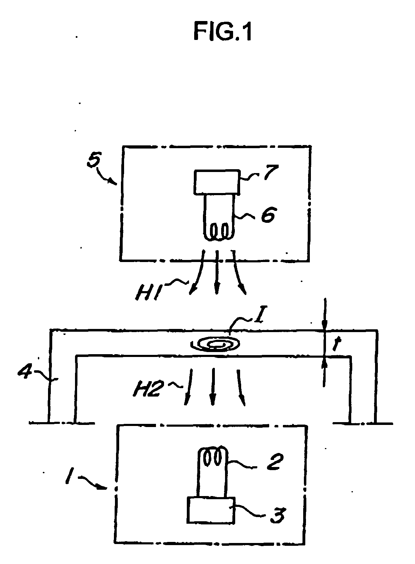

First, a structure of a first embodiment of a communication system employing a communication device according to the present invention will be described with reference to FIGS. 1 to 5. In FIG. 1, a transmitting/receiving section 3 having an antenna coil 2 is provided in a communication device 1, and the entire communication device 1 is protected by a thin metal layer 4. Meanwhile, in a data carrier 5 also, a transmitting/receiving section 7 having an antenna coil 6 is provided.

Next, a method of performing electromagnetic wave communication between the communication device 1 and the data carrier 5 will be described. For example, by allowing an electromagnetic wave for a wait to be transmitted constantly from the antenna coil 2 of the communication device 1 disposed inside the metal layer 4, a skin current I is generated in the metal layer 4 by the electromagnetic wave, and an electromagnetic wave having the same frequency is generated in the opposite side of the metal layer 4 by the skin current I.

When the data carrier 5 is brought near the communication device 1, the data carrier 5 is charged with electrical power by the electromagnetic wave to become in an activated state. Then, an electromagnetic wave H1 for a response which contains a specific code or the like is transmitted from the antenna coil 6 of the activated data carrier 5 toward the antenna coil 2 of the communication device 1. Although this electromagnetic wave H1 does not reach the antenna coil 2 of the communication device 1, it allows the metal layer 4 to generate a skin current I, and by the skin current I, an electromagnetic wave H2 of the same frequency is generated in the opposite side of the metal layer 4. that is, in the antenna coil 2 side of the communication device 1.

As a result of receiving this electromagnetic wave H2 by the antenna coil 2 of the communication device 1, communication between the data carrier 5 and the communication device 1 becomes possible. Conversely, in a case where the electromagnetic wave is transmitted from the communication device 1 toward the data carrier 5 also, communication is possible by a similar principle.

The frequency of the electromagnetic wave employed in the communication is variously selected from the frequency bandwidth range from several hundreds Hz to several MHz, and when such a high frequency electromagnetic wave is emitted to the metal layer 4, the skin current I is generated in the metal layer 4 as described above. It has been known that the thickness d of the skin current I is inversely proportional to (πfµ 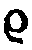 ) to a power of 1/2. Here, f represents the frequency of the electromagnetic wave, µ the dielectric constant of the metal layer 4, and 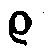 the electrical resistivity of the metal layer 4.

In order to perform communication by the electromagnetic induction effect through the metal layer 4, it is necessary to allow the thickness t of the metal layer 4 to be t≦d, and it has been known that the smaller the value of the thickness t of the metal layer 4 compared to the thickness d of the skin current I, the more the communication sensitivity is improved, where the thickness d of the skin current I is constant.

However, the smaller the value of the thickness t of the metal layer 4 (that is, the thinner), the more deteriorated the strength thereof, and when it reaches a limit, a protective function thereof cannot be performed. In order to enable the communication to be performed by the electromagnetic induction effect while achieving a practical protection strength, it is necessary to select a metal material which can make the thickness d of the skin current I thicker.

According to an experiment that the present inventors conducted, it has been known that an austenitic stainless steel, cupronickel, titanium, or the like is suitable for such a purpose. Further, brass or the like is also employable. Meanwhile, the values of the thickness d of the skin current I of iron, aluminum, copper, nickel, or the like are small, and thus communication is difficult unless they are made thin to the extent of foil.

Table 1 shown below is experiment results obtained by measuring a non-contacting communicable distance with respect to a data carrier structure in which austenitic stainless steel plate (SUS 301. 304, 316) and ferrite stainless steel plate (SUS 430) are employed as the metal plate forming the metal layer 4.

**[Table 1]**

| type of metal | | Thickness (mm) x number of sheets = layer thickness (mm) | Reading distance (mm) | |
|---|---|---|---|---|
| | | thickness(mm) × number of sheets = layer thickness (mm) | TAG 1 (outer diameter 50 mm) | TAG 2 (outer diameter 20 mm) |
| Austenitic stainless steel plate | SUS 301 | 0.5 × 1 = 0.5 | 0.92 | 0.48 |
| | | 0.5 × 2 = 1 | × | × |
| | | 1 × 1 = 1 | × | × |
| | SUS 304 | 0.05 × 1 = 0.05 | 43.55 | 8.96 |
| | | 0.05 × 2 = 0.1 | 34.99 | 5.66 |
| | | 0.05 × 3 = 0.15 | 29.23 | 3.23 |
| | | 0.05 × 4 = 0.2 | 23.20 | 1.69 |
| | | 0.05 × 5 = 0.25 | 7.74 | 0.05 |
| | | 0.05 × 6 = 0.3 | 2.94 | × |
| | | 0.05 × 7 = 0.35 | 1.04 | × |
| | | 1 × 1 = 1 | 7.91 | 2.80 |
| | | 1 × 2 = 2 | × | × |
| | SUS 316 | 0.5 × 1 = 0.5 | 19.35 | 6.84 |
| | | 0.5 × 2 = 1 | 6.38 | 0.50 |
| | | 0.5 × 3 = 1.5 | × | × |
| | | 1 × 1 = 1 | 8.91 | 2.57 |
| | | 1 × 2 = 2 | × | × |
| Ferrite stainless steel plate | SUS 430 | 0.05 × 1 = 0.05 | 17.74 | × |
| | | 0.05 × 2 = 0.1 | × | × |
| | | 0.5 × 1 = 0.5 | × | × |
| | | 1 × 1 = 1 | × | × |

Experiments were variously conducted while a method in which a plurality of thin metal plates are stacked was adopted in order to change the thickness of the metal layer 4, and in the case of the same thickness, a communication distance of a stacked layer was shorter than that of a single layer. It is assumed that the cause thereof is that in the case of a stacked layer, since an air layer lies between metal plates, a multi-step electromagnetic induction effect is created so that attenuation becomes greater.

Experiments were conducted in such a manner that two types of RFID tags (radio frequency identification TAGs) 1 and 2 with outer diameters of 50 mm and 20 mm, respectively are employed as the data carrier 5 having a disk-like antenna coil, and a read/write device (R/W device) for the RFID tags was employed as the communication device 1 to measure a reading distance (spaced distance between each RFID tag and the read/write device) through which information can be read correctly.

In Table 1, the value obtained by multiplying the plate thickness of each type of metal plate by the number of stacked layers is shown as the layer thickness of the entire metal layer 4, and the size of each metal plate forming the metal layer 4 is set at a sufficient one by which magnetic flux does not leak from an end portion. With respect to the reading distance, "X" represents a case where reading was not possible.

Table 2 shown below is experiment results obtained by conducting a method similar to that of Table 1 with respect to an iron plate, copper plate, cupronickel plate, nickel plate, titanium plate, aluminum plate, and brass plate.

**[Table 2]**

| type of metal | Thickness (mm) x number of sheets = layer thickness (mm) | Reading distance (mm) | |
|---|---|---|---|
| | thickncss(mm) × number of sheets = layer thickness (mm) | TAG 1 (outer diameter 50 mm) | TAG 2 (outer diameter 20 mm) |
| iron plate | 0.3 × 1 = 0.3 | × | × |
| copper plate | 0.05 × 1= 0.05 | 7.27 | × |
| | 0.05 × 2 = 0.1 | × | × |
| | 0.05 × 3 = 0.15 | × | × |
| | 0.05 × 4 = 0.2 | × | × |
| | 0.2 × 1 = 0.2 | × | × |
| Cupronickel plate | 0.1 × 1 = 0.1 | 29.44 | 1.15 |
| | 0.1 × 2 = 0.2 | 18.55 | 0.00 |
| | 0.2 × 1 = 0.2 | 19.98 | 0.00 |
| | 0.2 × 2=0.4 | 6.04 | 0.00 |
| nickel plate | 0.5 × 1 = 0.5 | × | × |
| | 1 × 1 = 1 | × | × |
| titanium plate | 0.1 × 1 = 0.1 | 30.68 | 4.52 |
| | 0.1 × 2 = 0.2 | 20.32 | 0.62 |
| aluminum plate | 0.015 × 1 = 0.015 | 18.89 | 4.68 |
| | 0.015 × 2 = 0.03 | 3.52 | × |
| | 0.015 × 3=0.045 | 1.69 | × |
| | 0.015 × 4 = 0.06 | × | × |
| | 0.015 × 5 = 0.075 | × | × |
| | 0.05 × 1 = 0.05 | 12.99 | × |
| | 0.05 × 2 = 0.1 | 0.00 | × |
| | 0.05 × 3 = 0.15 | × | × |
| Brass plate | 0.2 × 1 = 0.2 | × | × |
| | 0.2 × 2 = 0.4 | × | × |

As shown in Tables 1 and 2 above, as a material of the metal layer 4, austenitic stainless steel, cupronickel, titanium, and the like are preferred as the metal layer 4 protecting the communication device 1 of the present invention, and in the case where such a metal is employed, the thickness of the metal layer 4 is preferred to be appropriately selected from the range from 0.05 mm or greater to 1 mm or less.

By selecting the metal layer 4 from the metal materials described above and by selecting an appropriate thickness of the metal layer 4, high strength and durability in the communication device 1, particularly in the antenna 2 part, can be ensured, and it is possible to provide a communication device 1 having a practical communication sensitivity. "A metal layer having a material and a thickness through which electromagnetic wave communication is possible by the electromagnetic induction effect" according to the present invention means that the metal layer 4 having a material and a thickness through which such a function can be demonstrated.

According to the measurement data described above, communication is possible when the thickness is on the order of about 0.015 mm in the case where the material of the metal layer 4 is aluminum and when the thickness is on the order of about 0.05 mm in the case of copper. These metals have functions of moisturc-proofing, light-shielding, and the like and can be utilized as the metal layer 4 of the present invention. In a case where a thin aluminum or copper is employed as the metal layer 4, it is also possible to improve the strength thereof by stacking appropriate resin substrates or resin sheets on a side surface or both surfaces thereof to reinforce it.

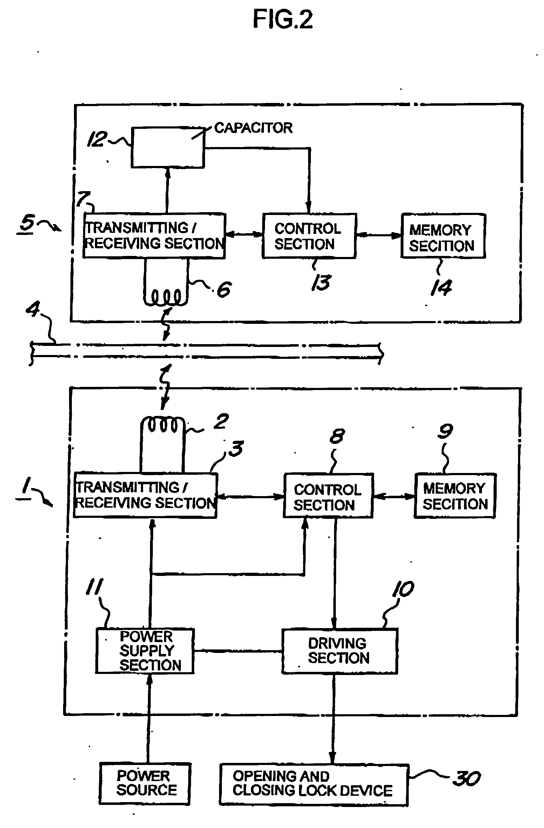

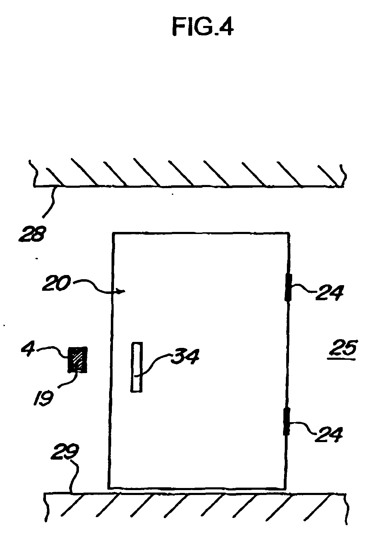

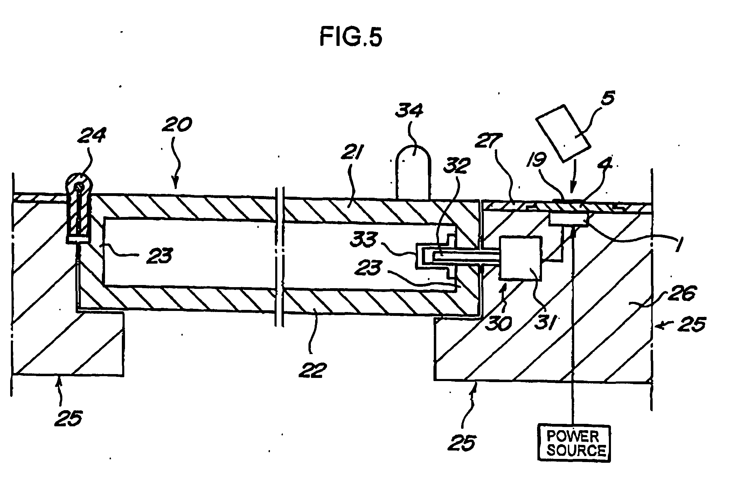

FIG. 2 is a block diagram explaining an opening/closing system of an opening/closing door constructed by a communication system according to the present invention utilizing the electromagnetic wave communication principle of the communication device 1. The communication device 1 is provided with the transmitting/receiving section 3 having the antenna coil 2, the control section 8 controlling transmission/reception of this transmitting/receiving section 3, a memory section 9 connected with the control section 8, a driving section 10 which receives a control signal from the control section 8 to output a drive signal to an opening/closing lock device 30 of an opening/closing door 20 shown in FIGS. 4 and 5, and a power supply section 11 which receives an external AC power source to supply a DC power source to the above-mentioned equipment.

The transmitting/receiving section 3, the control section 8, and the memory section 9 can be composed of a microcomputer, the power supply section 11 can be composed of a small-sized diode and a capacitor, and the driving section 10 can be composed of a thyristor circuit. It is desired that the antenna coil 2 of the communication device 1 has a disk type coil shape which can make the communication sensitivity high easily.

Meanwhile, the data carrier 5 is provided with the transmitting/receiving section 7 having the antenna coil 6, an electrical power accumulating capacitor 12 connected with the transmitting/receiving section 7, a control section 13 controlling transmission/rcccption of the transmitting/receiving section 7, and a memory section 14 connected to the control section 13.

The transmitting/receiving section 7, the capacitor 12, the control section 13, and the memory section 14 can be composed of a one-chip IC, and the antenna coil 6 is connected with this IC chip. The data carrier 5 employed may be either a card type or a stick-like key type. It is preferred that in the case of a card type, an antenna coil 6 having a disk type coil shape is employed, and in the case of a key type, an antenna coil 6 having a thin stick-like coil is employed.

Next, operations of the opening/closing system shown in FIG. 2 will be described. For example, when unlocking specific code information which has been stored in advance in the memory section 14 of the data carrier 5 is transmitted from the antenna coil 6 as an electromagnetic wave, this electromagnetic wave is received at the antenna coil 2 of the communication device 1 through the skin current I.

The received specific code information is compared and checked with the code information stored in the memory section 9 in advance by the control section 8 so that the difference between the two is recognized, and when the both information correspond to each other, the control signal is outputted from the control section 8 to the drive section 10 so that an unlock signal is outputted from the drive section 10 to the opening/closing lock device 30 shown in FIG. 5. When they do not correspond to each other, the control signal for unlocking is not outputted from the control section 8.

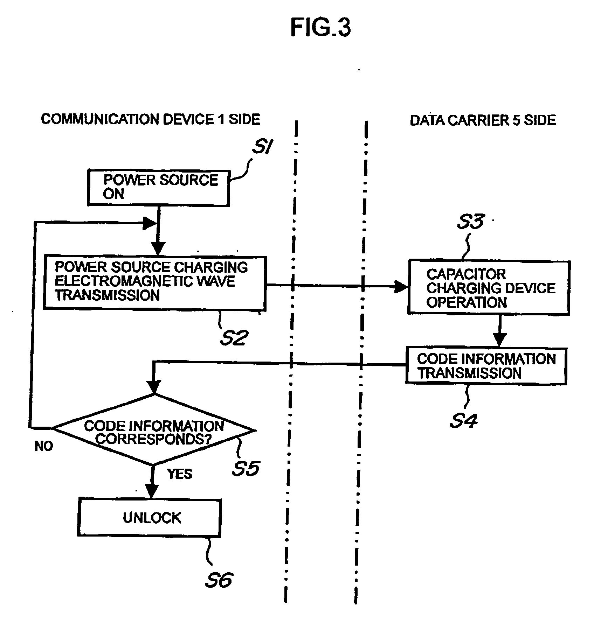

FIG. 3 is a flow chart showing operations of the opening/closing system. First, if the power source of the communication device 1 is turned on at step S1, the control section 8 of the communication device 1 controls the transmitting/receiving section 3 so as to repeatedly transmit an electromagnetic wave for charging the power supply of the data carrier 5 at relatively short time intervals (step S2).

If the data carrier 5 approaches the communication device 1, the data carrier 5 receives the electromagnetic wave by the antenna coil 6 thereof to allow the transmitting/receiving section 7 to be in an operation state and to charge the electrical energy of the electromagnetic wave in the capacitor 12 as electrical power. If the capacitor 12 is charged so that the circuit's voltage increases to a normal voltage, the control section 13 becomes in the operation state (step S3).

Then, the control section 13 transmits the unlocking specific code information stored in the memory section 14 from the transmitting/receiving section 7 to the communication device 1 (step S4). The communication device 1 which has received the code information compares and checks the code information with the code information which the control section 8 has allowed the memory section 9 to store as described above (step S5), and if the both code information correspond to each other, the unlocking control signal (unlocking signal) is outputted so that the opening/closing lock device 30 unlocks the opening/closing door 20 (step S6). If the both code information do not correspond to each other, the control signal (unlocking signal) is not outputted to return to step S2, so that the power source charging electromagnetic wave transmission is repeated.

FIGS. 4 and 5 are a front view and a side cross-sectional view showing one example of a case where the opening/closing system utilizing the communication system according to the present invention is applied to the opening/closing door of a targeted building composed of a metal material and to a wall 25 adjacent thereto, and FIG. 4 is a front view seen from the outside of the opening/closing door 20. The opening/closing door 20 of the building, as shown in FIG. 5, is composed of a front side plate 21 and a back side plate 22 made of an iron plate and side plates 23 coupling with these, and one side plate 23 is openably/closably coupled with the wall 25 by means of a plurality of hinge members 24.

The wall 25 is composed of a thick base portion 26 made of reinforced concrete and a covering plate 27 made of a relatively thin iron plate constituting a metal layer covering the surface of the base portion 26, and is constructed upright between a ceiling part 28 and a floor part 29 as shown in FIG. 4. The communication device 1 and a driving section 31 of the opening/closing lock device 30 are disposed inside the targeted wall 25. These communication device 1 and opening/closing lock device 30 are inserted into a space part formed inside the wall 25 from the back side and are detachably secured to a peripheral wall part

The driving section 31 of the opening/closing lock device 30 is constructed for example of an electromagnetic drive type cylinder, and a distal end of a drive shaft 32 of the driving section 31 is inserted into or retracted from a receiving portion 33 provided in the side plate 23 of the opening/closing door 20 to lock or unlock the door.

A knob 34 for allowing a hand to do an opening/closing operation is provided on the opening/closing door 20 as shown in FIGS. 4 and 5. Further, an unillustrated manually operated lever for locking the opening/closing lock device 30 toward a lock side is provided in the back side of the opening/closing door 20.

The communication device 1 is arranged adjacent to the covering plate 27 so that a communication side of the communication device 1, that is, the antenna 2 side, approaches the surface side of the wall 25 as shown in FIG. 5. The entire communication device 1 including the transmitting/receiving section 3, the control section 8, and the memory section 9 is protected by the covering plate 27.

The communication device 1 is arranged on the surface side of the targeted wall 25 via the covering plate 27 constituting the metal layer having a material and a thickness described above through which communication is possible with the data carrier 5 by the electromagnetic induction effect. The opening/closing lock device 30 is disposed between the opcning/closing door 20 made of a metal material and the wall 25 adjacent thereto, and the opening/closing lock device 30 disposed in the targeted wall 25 made of a metal material is opened/closed without contacting the data carrier 5.

At that time, in a case where the covering plate 27 facing the communication side of the communication device 1 does not achieve the function of the above-described "the metal layer having a material and a thickness through which communication is possible by an electromagnetic induction effect", for example in a case of a thick iron plate or the like, such a part is opened so that the metal layer 4 suitable for the communication device 1 of the present invention as shown in FIGS. 4 and 5 is bonded by welding or the like. The material of the metal layer 4 is appropriately selected from the group consisting of austenitic stainless, titanium, and cupronickel, and the layer thickness is also appropriately selected from the range from 0.05 mm or greater to 1 mm or less.

Thus, the surface side of the antenna coil 2 which is the communication side surface of the communication device 1 and which constitutes the antenna part is covered by the metal layer 4.

It is possible to provide, on the surface side of the metal layer 4 which is to be the surface side of the wall 25, a position display section displaying a communication position or a code display section displaying a mark 19, a figure, a symbol, or the like having a code function.

The position display section which is provided on the surface of the metal layer 4 covering the communication side surface of the communication device 1 and which shows the communication position is not limited to a specific configuration as far as it has discriminability such as a projecting portion, character, figure, symbol, pattern, color, or the like. The mark 19 shown in FIGS. 4 and 5 is formed by coloring which is different from the ground color of the metal layer 4.

In this manner, in a case where the code display section of a mark, symbol, or the like having a code function is provided on the outside of the metal layer 4, only a person who is allowed to know in advance such a provision as a code display or who has recognized it can allow the data carrier 5 to approach the code display section of the mark, symbol, or the like and can communicate with the communication device 1, whereby improved security and communication sensitivity can be ensured.

The opening/closing lock mechanism in which the communication device 1 is installed is disposed to be laid across the opening/closing door 20 and the wall 25 containing the covering plate 27 made of a metal material adjacent to the opening/closing door 20, and the communication device I is disposed inside the wall 25.

Since operations of the opening/closing system shown in FIG. 5 are similar to those described above with reference to FIGS. 2 and 3, description thereof will not be described.

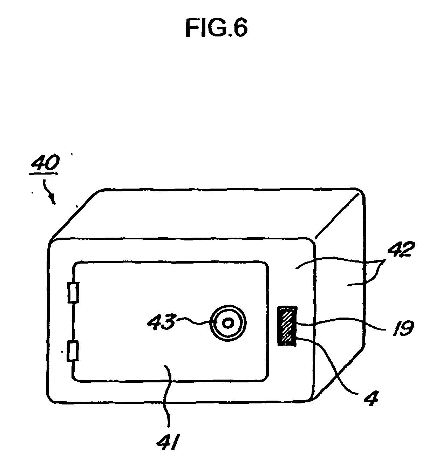

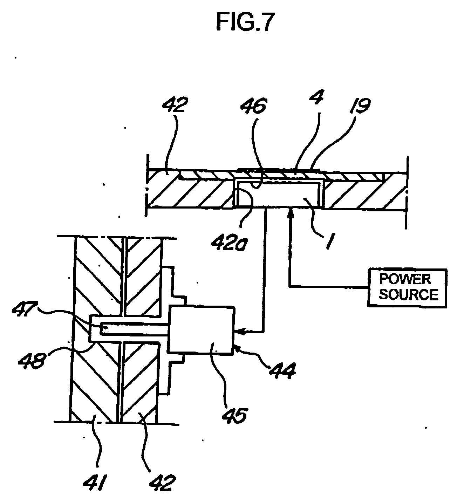

Next, a structure of a second embodiment of a communication system employing a communication device according to the present invention will be described with reference to FIGS. 6 and 7. As shown in FIG. 6, a safe 40 made of a metal material is constructed to be a sealing type which is provided with a front opening/closing lid (opening/closing door) 41 and a peripheral wall 42, and a dial knob 43 which can unlock the lid by checking the number is provided on the opening/closing lid.

As shown in FIG. 7, a driving section 45 of the communication device 1 and an opening/closing lock device 44 is arranged inside the safe 40. A small opening portion 42a is provided on the wall 42 adjacent to the dial knob 43 of the opening/closing lid 41, and the communication device 1 is arranged on the opening portion 42a. At that time, the communication side of the communication device 1 is disposed so as to be in the surface side of the wall 42.

A non-conductive fire-proof layer 46 lies between the communication device 1 and the metal layer 4 provided on a part of the surface side of the wall 42. Meanwhile, the driving section 45 is for example composed of an electromagnetic drive type cylinder, and a distal end of a drive shaft 47 of the driving section 45 is inserted into or retracted from a receiving portion 48 provided upon the opening/closing lid 41 to lock or unlock the door. The opening/closing lock device 44 is arranged between the opening/closing lid 41 of the safe 40 formed of a metal material and the wall 42 adjacent thereto, and this opening/closing lock device 44 is automatically locked to the lock side when the opening/closing lid 41 is closed.

The opening/closing lock mechanism in which the communication device 1 is installed is disposed to be laid across the opening/closing lid 41 and the wall 42 made of a metal material adjacent to this opening/closing lid 41, and the communication device 1 is disposed on the opening portion 42a arranged on the wall 42.

It is possible to provide, on the surface side of the metal layer 4. a position display section displaying a communication position or a code display section displaying a mark 19, a figure, a symbol, or the like having a code function.

It is also possible to dispose the data carrier 5 in a steering wheel part of a key of an automobile, to install the communication device 1 whose antenna coil 2 is arranged on a periphery of the surface of a key insertion opening of an engine starter or a door, and to provide the metal layer 4 on the surface thereof to cover it.

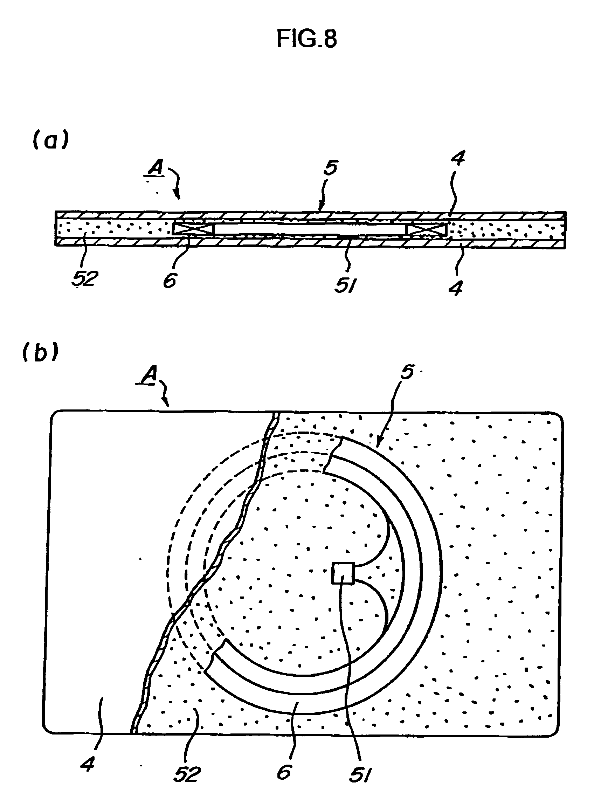

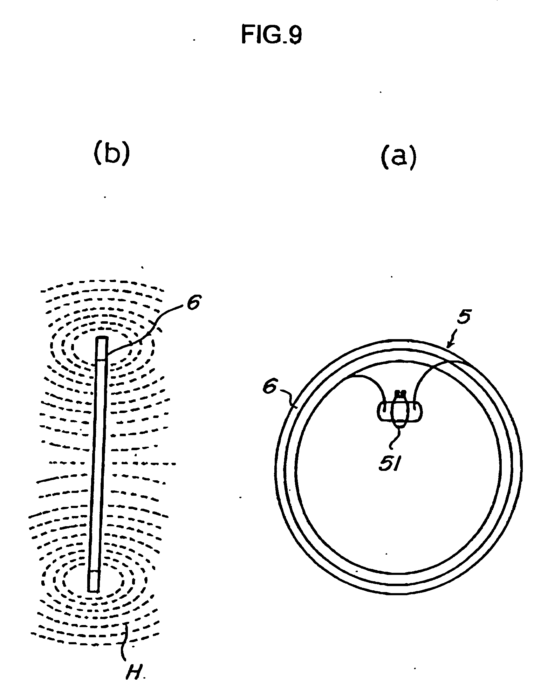

FIG. 8A and 8B is one example in which a data carrier structure A is formed into a card shape. Reference numeral 4 denotes a metal layer provided on both surfaces of the data carrier 5, reference numeral 6 a circular antenna coil formed by winding a lead wire around an air core coil as shown in FIG. 9, reference numeral 51 a semiconductor 1C chip (control chip) composed of an integrated circuit, and reference numeral 52 a resin layer.

In the data carrier 5 which is a circular or ring shape shown in FIG. 9, the data carrier which an antenna coil 6 composed of a circular air core coil and the semiconductor IC chip 51 connected thereto are formed by embedding in resin to be entirely molded and has an outer diameter of the order of 10 to 50 mm and a thickness of the order of 0.7 to 12.0 mm is on the market. For example, a model of Logi Tag and the like marketed by Hanex Co., Ltd is applicable.

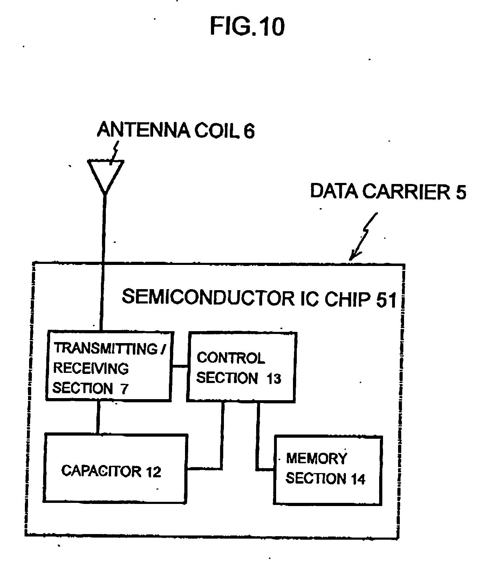

The semiconductor IC chip 51, as shown in FIG. 10, has the control section 13 such as a CPU (central processing unit) and the like, the memory section 14 such as a memory and the like having a writable non-volatile storage clement, the transmitting/receiving section 7, and the electrical power accumulating capacitor 12.

A transmitting/receiving method of the data carrier 5 will be explained with reference to FIG. 10. First, when the communication device 1 such as a read/write device and the like in a first step transmits an electromagnetic wave for calling the data carrier 5 and for transmitting electrical power, the data carrier 5 receives the electromagnetic wave through a tuning operation of the transmitting/receiving section 7 composed of the antenna coil 6 and a transmitting/receiving circuit, and the electrical power is stored in the capacitor 12. Thus, since the data carrier 5 becomes in the operation state, in the next step, an elcctromagnctic wave for reading is transmitted from the communication device 1 to the data carrier 5.

The electromagnetic wave is inputted from the antenna coil 6 of the data carrier 5 to the control section 13 via the transmitting/receiving section 7, and according to the input the control section 13 reads necessary information out of the memory section 14 to allow the information to be transmitted from the transmitting/receiving section 7 to the communication device 1 via the antenna coil 6 as an electromagnetic wave. In a case where data is written in the memory section 14 of the data carrier 5 from the communication device 1 also, such an operation is performed in accordance with the above-described method. These series of steps are performed roughly instantly.

In general, the electromagnetic wave can be represented by an electric field and a magnetic field which have a phase difference of 90 degree, to be transmitted alternatingly, and transmission/reception is performed utilizing current (high frequency current) flowing in the antenna coil 6 by allowing the magnetic field and the antenna coil 6 to intersect with each other.

For example, in a case where the electromagnetic wave is transmitted from the antenna coil 6, a high frequency magnetic field component is distributed as a loop (magnetic flux loop) passing through the center of the antenna coil 6 by the high frequency current flowing in the antenna coil 6, and when the antenna coil 2 of the communication device 1 is placed in this magnetic flux area, the communication device 1 can receive information from the data carrier 5.

Similarly, in a case where the electromagnetic wave is transmitted from the communication device 1 also, the magnetic field component is distributed around the antenna coil 6 of the data carrier 5 so that the antenna coil 6 receives it.

The data carrier 5 is formed by being molded by a resin layer 52 in a state in which the semiconductor IC chip 51 is connected to the circular antenna coil 6, and is formed into a card shape in such a manner that a metal layer 4 which is for example made of austenitic stainless steel plate, titanium plate, or cupronickel plate and whose thickness is selected from the range from 0.05 mm or greater to 1 mm or less is allowed to adhere to both surfaces of the data carrier 5 by gluing or the like.

In the card shaped data carrier structure A, since the surface thereof is covered with the metal layer 4, it can be utilized as an IC card.

In this manner, by providing a specific metal layer 4, communication can be performed between the data carrier 5 and the external communication device 1 by the electromagnetic induction effect at a practical communication sensitivity. Further, by allowing the metal layer 4 to exist, the data carrier 5 can be protected from an external shock further reliably.

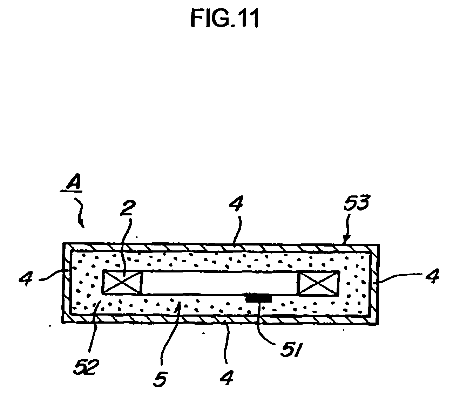

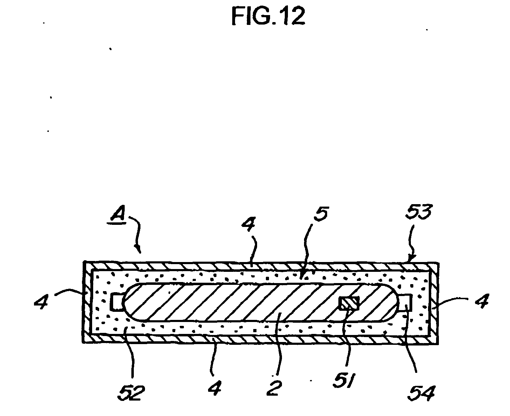

FIGS. 11 and 12 show another example of the data carrier structure A. In this example, as shown in FIG 11, the data carrier 5 (see FIG. 9A and 9B) having the circular antenna coil 2 or a data carrier 5 having a circular shape antenna coil 2 as shown in FIG. 12 is respectively accommodated inside a vessel 53 formed by the metal layer 4 made of an austenitic stainless steel plate, and its space is filled with a resin layer 52 to be sealed.

The data carrier 5 shown in FIG. 12 has a cylindrical rod antenna formed by densely winding an antenna coil 2 around the outer periphery of a cylindrical core member 54 such as an iron core, ferrite, or the like formed into a rod shape by single line winding in a spiral shape in the axial direction thereof (horizontal direction in FIG. 12), and is constructed by allowing both ends of the antenna coil 2 to be connected to the semiconductor IC chip 51 constituted by an integrated circuit.

In such a data carrier 5 which is entirely formed into a rod shape, the data carrier which is formed by sealing a rod antenna part including the core member 54 and the antenna coil 2 and the semiconductor IC chip 51 composed of an integrated circuit in a slender glass vessel and which is miniaturized so as to have an outer diameter on the order of several millimeters and a total length on the order of ten and several millimeters to several tens millimeters is on the market. As this type of data carrier, there is Glass Tag marketed by Hanex Co., Ltd as a RFID tag, and it has an outer diameter of 2 to 4 mm and a length on the order of 12 to 15 mm so that it is exceedingly compact.

## Claims

1. A communication device comprising a transmitting/receiving section including an antenna, a control section, and a memory section to perform electromagnetic wave communication with a data carrier, wherein at least a surface side of the antenna part of the transmitting/receiving section is covered with a metal layer and that the metal layer has a material and a thickness by which electromagnetic wave communication is possible with the data carrier via the metal layer by an electromagnetic induction effect.

2. The communication device according to 1, wherein at least a communication side surface of the communication device including the transmitting/receiving section, control section, and memory section is covered with the metal layer.

3. The communication device according to 1, wherein the material of the metal layer is austenitic stainless steel, titanium, or cupronickel.

4. The communication device according to 1, wherein the thickness of the metal layer is selected from the range of 0.05 mm or greater to 1 mm or less.

5. The communication device according to 1, wherein a position display section displaying a communication position is provided on a surface side of the metal layer or a code display section having a code function composed of a mark, a figure, or a symbol is provided.

6. A communication system comprising a data carrier having a transmitting/receiving section including an antenna, a control section, and a memory section and a communication device having a transmitting/receiving section including an antenna, a control section, and a memory section to perform electromagnetic wave communication with the data carrier,
wherein at least a surface of the antenna part of the communication device is covered with a metal layer and that the metal layer has a material and a thickness by which electromagnetic wave communication is possible to perform with the data carrier via the metal layer by an electromagnetic induction effect.

7. The communication system according to 6, wherein at least one surface of the data carrier is covered with a metal layer and that the metal layer has a material and a thickness by which electromagnetic wave communication is possible to perform with the communication device via the metal layer by an electromagnetic induction effect.

8. The communication system according to 6, wherein the communication device is installed in an opening and closing lock mechanism, that at least a surface side of the antenna part of the communication device is covered with the metal layer, and that in the communication device the control section recognizes the difference between code information stored in the memory section thereof and specific code information transmitted from the data carrier so that the control section of the communication device outputs an unlock signal to the opening and closing lock mechanism when both information correspond to each other.

9. The communication system according to 8, wherein the opening and closing lock mechanism is disposed so as to be laid across an opening and closing door or an opening and closing lid and a metal wall adjacent thereto or a wall containing a metal material and that the communication device is arranged in an opening part provided on a wall or inside the opening part.

10. The communication system according to 9, wherein a position display section displaying a communication position is provided on a surface side of the wall or a code display section having a code function composed of a mark, a figure, or a symbol is provided.
